**Europäisches Patentamt**

**European Patent Office**

**Office européen des brevets**

(19)

(11) Publication number: **0 114 928**
**B1**

(12) EUROPEAN PATENT SPECIFICATION

(45) Date of publication of patent specification: **23.12.87**

(51) Int. Cl.⁴: **G 06 F 13/36**

(21) Application number: **83108761.4**

(22) Date of filing: **06.09.83**

(54) Bus arbitration system for a data processing system.

(30) Priority: **20.12.82 US 450886**

(43) Date of publication of application:
**08.08.84 Bulletin 84/32**

(45) Publication of the grant of the patent:
**23.12.87 Bulletin 87/52**

(84) Designated Contracting States:
**BE CH DE FR GB IT LI NL SE**

(56) References cited:
**US-A-3 997 896**
**US-A-4 059 851**

**IBM TECHNICAL DISCLOSURE BULLETIN, vol.
25, no. 6, November 1982, pages 3037-3041,
New York, USA H.L. KURTZ et al.: "Multilevel,
single-line, serial priority poll featuring poll-in,
poll-out and poll-capture"**

(73) Proprietor: **International Business Machines
Corporation
Old Orchard Road
Armonk, N.Y. 10504 (US)**

(72) Inventor: **Kelley, Richard Allen
240 N.W. 81 St. Terrace
Coral Springs Florida 33065 (US)**
Inventor: **Kurtz, Hobart Lamoree
425 N.W. 11 th Street
Boca Raton Florida 33432 (US)**
Inventor: **Magrisso, Israel Ben
4401 N.W. 103rd Drive
Coral Springs Florida 33065 (US)**
Inventor: **Quanstrom, Jack Leo
1384 S.W. 12th Street
Boca Raton Florida 33432 (US)**

(74) Representative: **Bonneau, Gérard
Compagnie IBM France Département de
Propriété Intellectuelle
F-06610 La Gaude (FR)**

Courier Press, Leamington Spa, England.

(56) References cited:

**IBM TECHNICAL DISCLOSURE BULLETIN, vol.
25, no. 6, November 1982, pages 3034-3036,
New York, USA H.L. KURTZ et al.: "Multilevel,
single-line serial priority poll with
minimization of pin count and propagation
delay"**

**MICROELECTRONICS AND RELIABILITY, vol.
16, no. 4, 1977, pages 281-293, Pergamon
Press, Oxford, GB. P. HUGHES et al.: "Multi-
processor systems"**

**MICROPROCESSING AND
MICROPROGRAMMING, vol. 11, no. 1, January
1983, pages 15-22, Amsterdam, NL. G. CIOFFI
et al.: "A fully distributed arbiter for
multiprocessor systems"**

## Description

This invention relates to a bus arbitration system for data processing systems, communications systems, and the like enabling a more efficient serial polling wherein time delays heretofore encountered are significantly reduced.

A representative system configuration in which the present inventive features are utilized may include multiple components such as processors and input/output devices which share a common bus and various peripheral resources such as storage units, display terminals, printers and the like. For convenience, system components attached to a common bus are referred to as bus units. Bus units can be categorized according to function into two broad classes that are referred to herein as Master Bus Units (MBU's) and Slave Bus Units (SBU's). An MBU is a bus unit that can request the bus and upon receiving a grant or acknowledgement from a bus arbiter, take control of the bus, address another bus unit, which may be a storage unit or peripheral device, and control the transfer of information between itself and the second bus unit. When such an MBU has control of the bus, it is commonly referred to as the bus master. An SBU is a bus unit that is addressed by a bus master and which responds only to signals or commands from the bus master. Examples of MBU's are processors of various types, direct memory access (DMA) devices and "intelligent" terminals. The SBU category includes storage units, display units, printers and "dumb" terminals. Basically, the distinction between the two types of bus units is that an MBU can becomes a bus master while an SBU cannot.

In order to resolve contention for the bus and thereby grant access to shared resources, some method of bus arbitration is required. There are two fundamental kinds of bus arbitration, referred to as radial and serial. Radial arbitration involves multiple sets or pairs of request and grant lines. Requests from different MBU's can be received simultaneously on separate request lines by a central bus arbiter. The arbiter uses prioritization logic to select a requestor and issues a bus grant on the corresponding grant signal line.

In serial arbitration schemes, several bus units are attached to a single request line, as described in the Article of HUGHES and DOONE "Multiprocessor systems" published in Microelectronics and Reliability, volume 16, No. 4, 1977 pages 281—293. The request line may be activated by two or more bus units at a time. The decision as to which requestor is granted use of the bus depends on a serial poll. Activation of the request line results in presentation of a poll signal to the first bus unit in a polling chain. If the bus unit has an active request, it takes control of the bus and blocks further propagation of the poll signal. If it does not have an active request, it passes the poll signal to the next bus unit, which may either intercept it or pass it on to another bus unit, etc.

Arbitration arrangements have also been proposed and implemented which combine radial and serial polling schemes. Multiple levels of priority are represented by a corresponding number of request and grant signal pairs. Each pair of signals can be attached to several MBU's. Arbitration between requests presented on separate request lines is performed by a central arbiter, which responds to multiple simultaneous requests by activating a single grant signal corresponding to the highest priority active request. Arbitration between simultaneous requestors on the level represented by the grant signal is then completed by serial polling.

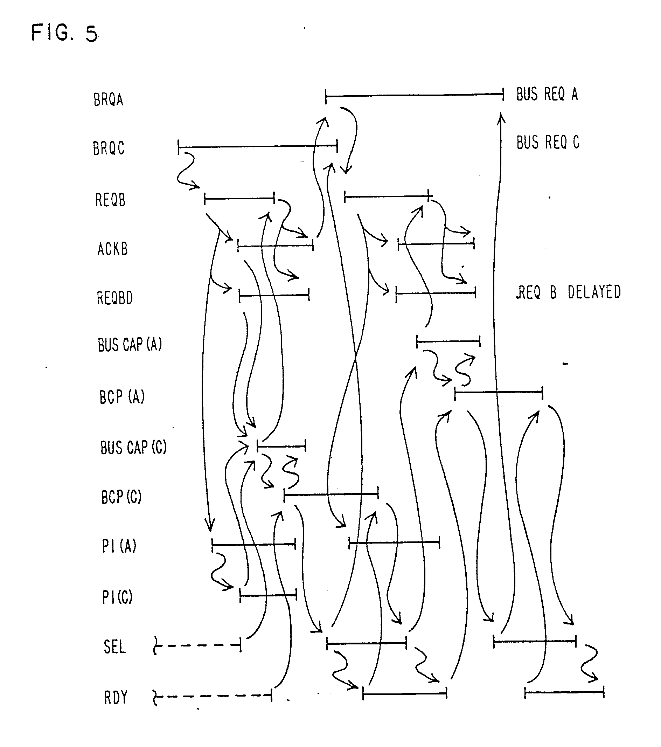

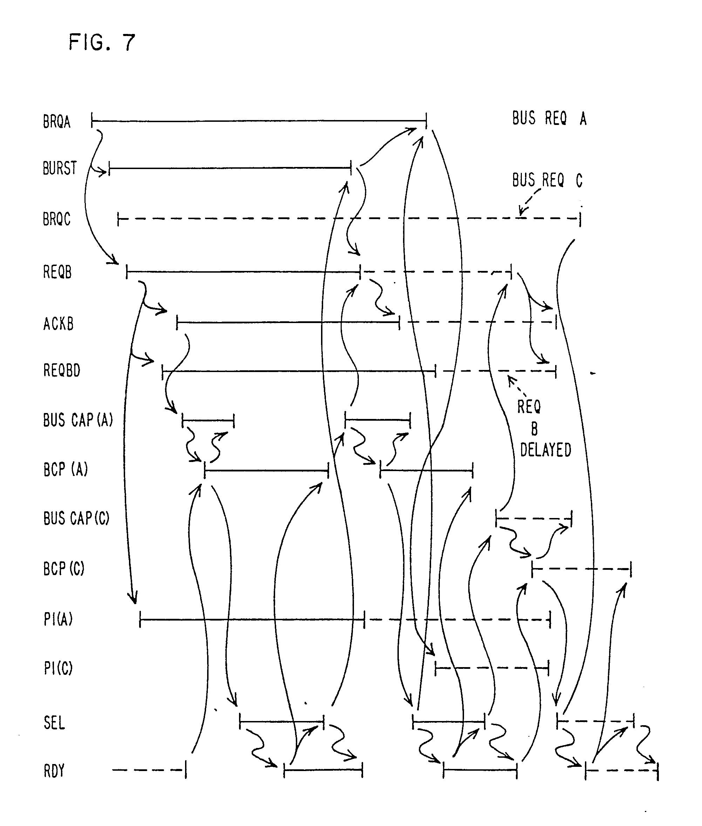

Good examples of such systems are shown in the above cited article "Multi-Processor Systems" published in Microelectronics and Reliability (Fig. 4 and Fig. 7) and in the Articles "Multilevel, single-line serial priority poll with minimization of pin count and propagation delay" published in IBM Technical Disclosure Bulletin, vol 25, No. 6, November 1982, pages 3034—3036, and "Multilevel, single line, serial priority poll featuring poll-in, poll-out and poll-capture" published in IBM Technical Disclosure Bulletin, vol 25, No. 6, November 1982, pages 3037—3041. In the third article which corresponds to the preamble of claim 1 the CPU arbitrates all active requests and generates an acknowledgement signal used to inhibit the setting of the active-level request latch. This prevents it from changing state due to a service request being activated after the request acknowledge poll cycle has started. The acknowledgement signal initiates a delay interval of sufficient duration to allow the output of the request latch on the selected level to reach a stable state in the event that a transition state existed at the time the acknowledgement signal became active. The delayed acknowledgement signal is applied as a condition to enable either poll propagation or the setting of a Poll-Capture state. If, at the decision point, the Request latch corresponding to the active acknowledgement level is set, the poll will be intercepted. If not, it will be propagated by activation of Poll-Out. Then, the device that captures the poll resets its request and notifies the CPU by an appropriate signal that it is ready for service.

The invention described herein is applicable to systems incorporating a combination of radial and serial arbitration as described above, wherein a central arbiter arbitrates between simultaneous requests presented on separate request lines in a radial arbitration arrangement while contention between requestors on the same level, represented by a given request line is resolved by serial arbitration.

More particularly, the invention as claimed relates to a bus arbitration system for establishing in successive bus cycles the polling and interconnection of devices assigned to a bus in a data processing system, the bus including a plurality of bus address, data and control lines. The arbitration system comprises: a bus arbiter for receiving request signals for use of the bus on a common request line, and for supplying acknowledgement signal to grant use of the bus on a common acknowledge line, a plurality of bus units arranged on the bus and requiring access to the bus for control of data processing operations in the system, a polling line serially connecting all bus units to one another in accordance with a predetermined priority polling sequence from highest priority to lowest priority for the purpose of polling the bus units, a request latch in each of the bus units operable to be set upon a request by the bus unit for generating a signal on the request line, a bus capture latch in each bus unit to be set if the request latch is sent and upon the presence of a poll-in signal and bus acknowledgement signal, a propagation gate in each bus unit to propagate the polling signal to the next bus unit if the bus request latch is not set, inhibit means to inhibit the set input of the request latch in each bus unit to stabilize the request latch upon the presence of a request signal on the request line and a delay element connected to the inputs of the bus capture latch and the propagation gate in each bus unit insuring that the bus capture latch or the propagation gate will not be enabled until the request latch has stabilized, each delay element acting in parallel with poll propagation and with each other and being tailored to the specific technology of each bus unit.

The system of the invention is characterized in that the common request line is simultaneously used as a direct input of the polling line into the first bus unit of the priority polling sequence, and in each bus unit as a direct input to the inhibit means of the request latch and to the delay element, so that the polling propagation and the stabilization of the request latches can begin without waiting for acknowledgement from the bus arbiter.

Primary objectives of the present invention are 1) to start serial propagation as soon as possible after a request is presented and 2) minimize the poll propagation rate.

US—A—3 997 896 describes a bus arbitration system as in the precharacterizing part of claim 1, but without the radial arbitration i.e. without a bus arbiter and without a common acknowledge line, but with the feature in the characterizing part of claim 1 that the common request line is simultaneously used as a direct input to the inhibit means and to the delay element.

For a better understanding of the present invention, reference is made to the description taken in connection with the accompanying drawings, where:

Figure 1 shows a data processing system including several master bus units (MBU's) and slave bus units (SBU's), the system utilizing a parallel bus structure with serial polling and a combination of radial and serial arbitration controlled by a central bus arbiter.

Figure 2 illustrates a generalized bus arbitration sequence.

Fig. 3 illustrates bus request and arbitration logic for an individual MBU in Fig. 1.

Fig. 4 illustrates a logic modification for resolving bus lockout conditions sometimes encountered under the circumstances shown in Fig. 6.

Fig. 5 is a timing diagram for a first case: non-simultaneous requests.

Fig. 6 is a timing diagram for a second case: nearly simultaneous requests.

Fig. 7 is a timing diagram for a third case: two nearly simultaneous requests, one of which is a burst-mode request.

The following abbreviations will be occasionally used in the description:

| Abbreviation | Definition |
|---|---|
| A | AND circuit |
| ACKB | Acknowledge Bus Signal |
| BRQ | Bus Request Latch |
| BURST, BURST | Burst Mode, Not Burst Mode |
| BUS CAP | Bus Capture Latch |
| CBM | Current Bus Master |
| CPU | Central Processing Unit |
| D Block | Driver |
| I | Invert Circuit |
| I/O | Input/Output |
| MBU | Master Bus Unit |
| OR | OR Circuit |
| PI, PI | Poll In, Not Poll In |
| PO | Poll Out |
| Q, Q | True, Complement Outputs of Latch |
| R | Reset Input of Latch |
| R Block | Receiver |
| REQB | Request Bus Signal |
| REQBD | Request Bus Signal Delayed |
| RDY | Ready |
| S | Set Input of Latch |
| SEL | Select |

In existing serial poll implementations there are two sources of delay in addition to the unavoidable propagation time caused by receivers, drivers and internal decision logic. The first is the normal time delay between activation of a request signal and the acknowledgement or grant response from the arbiter, inasmuch as the acknowledgement signal is normally used to initiate the actual polling sequence. An important aspect of the present system is that this source of delay is eliminated by using the request signal, instead of the acknowledge signal, as the direct input that starts the polling operation. The second source of delay is the necessity of introducing a specific delay between the time a signal is applied, to "freeze" or stabilize the request state in each bus unit, and the point at which the decision logic can be allowed to propagate the signal.

Basically, the request state established by setting a request latch must be guaranteed to be stable before it is used as a condition for poll propagation. In present schemes this is accomplished in either of two ways:

1) The acknowledgement or grant signal is applied directly without intervening delays to an inhibiting input of the request latch in each bus unit. This prevents the latch from changing state due to subsequent input signals. The same grant signal, delayed by a fixed-delay element, is applied to the poll input of the first bus unit. The fixed delay at the beginning of the polling chain insures that all request latches will have time to reach a stable state, as a result of the inhibiting input, before the signal reaches the respective poll propagation decision logic in each bus unit.

2) In a second scheme, seen in some implementations, the poll signal, itself, is used in each peripheral adapter as the inhibiting input to the request state. The decision to propagate is then delayed, by a fixed delay element, a sufficient time to insure that the request latch has reached a stable state before its output is used as a condition for propagation.

The first technique, using a single delay at the beginning of the polling chain has two disadvantages: 1) It delays the starting of poll propagation through the polling chain and 2) it requires the specification of a delay element that will satisfy the worst-case logic delay characteristics of any MBU that may ever be used in the system. Specification of worst-case characteristics results in a performance penalty by requiring that the delay be greater than might be necessary for a system using exclusively peripherals with fast logic.

The second method provides a delay element in each bus unit which may match or conform with the logic-speed characteristics of the bus unit to minimize the logic decision delay. However, the delays of successive bus units operate serially such that the total poll propagation time includes the sum of these delays.

The cited disadvantages are overcome by providing a delay element in each bus unit that can be tailored to the logic speed characteristics of tqs bus unit, and that is connected in a manner such that all delay elements operate in parallel, rather than serially, with each other, and with any circuit and signal transfer delays inherent in generating and passing the poll signal through the polling chain. The delay of a given bus unit in responding to a poll signal applied to the poll input of the first bus unit in a chain is determined either by its internal delay element and logic delays, or by the poll propagation time through preceding bus units as affected by individuals delay elements of those bus units, acting in parallel, whichever is greater.

Except for the serial-poll propagation delays, which are independent of the delays required for request stabilization and which may become negligible with fast logic, the parallel-delay-element scheme approaches the speed and efficiency of a radial arbitration scheme, since radial arbitration of asynchronous requests must also incorporate comparable request stabilization delays.

Two features are of particular interest:

1. Use of a bus request signal as the direct input to a polling chain.

2. The concept of parallel request-stabilization delays, which makes it possible for this scheme of serial arbitration to approach the speed and efficiency of a radial arbitration scheme.

As indicated, the prior system in the IBM technical disclosure bulletin delays the start of serial polling until an acknowledgement signal (referred to here as ACKB) is received from the arbiter. Prior systems have also provided fixed delay elements located serially in the poll-propagation path to insure that the decision logic in each bus unit has had time to become stable before the poll input to the logic becomes active. The decision logic, which is conditioned by a bus request latch, determines whether the poll is to be "captured" by the corresponding bus unit or propagated to the next bus unit. Stabilization of the circuits is initiated by using the acknowledgement signal as a direct input to all request latches, in such a manner as to inhibit further changes of state until the polling process has been completed.

These techniques can substantially degrade performance, particularly in the case of a central arbiter that performs radial arbitration between different priority levels represented by separate pairs of request and acknowledgement signals, each of which may correspond to a serial polling scheme for arbitration between bus units assigned to the same priority level.

Further problems are the necessity of providing minimum inactive and active times for the SEL signal, as dictated by the architecture, to allow time for detection by the bus arbiter, and the requirement of a minimum inactive time for the ACKB signal to condition the polling logic and request latches for arbitration of new requests.

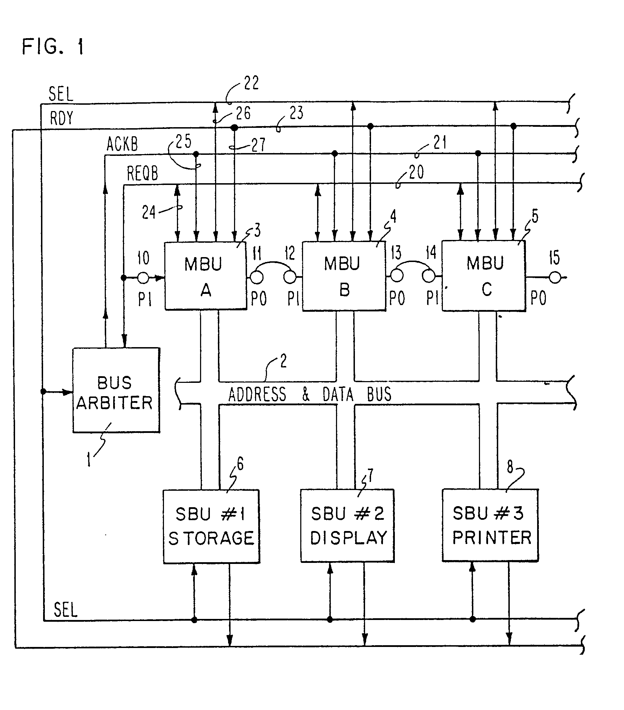

The arbitration technique described herein resolves these matters in implementing serial bus arbitration by using an earlier REQB signal instead of an ACKB signal as the propagated polling signal making it possible to initiate arbitration prior to activation of the ACKB line as shown in Fig. 1, and by a method of applying stabilization delays in each bus unit, such that the delays act in parallel with each other and with the poll propagation, instead of serially, and, therefore, do not degrade performance by adding to the poll propagation time.

The data processing system of Fig. 1 comprises a bus arbiter 1 controlling access of a number of devices to a parallel bus 2. Bus 2 is interconnected with Master Bus Unit (MBU) devices 3—5 further designated MBU A, MBU B, and MBU C, respectively, and with Slave Bus Unit (SBU) devices 6—8, designated as SBU No. 1, SBU No. 2, and SBU No. 3 corresponding, respectively, to a storage unit, a display unit, and a printer. As indicated, the attached devices are classified as two basic types:

1) Master Bus Units (MBU's) that have the capability of taking control of the bus in the capacity of a "bus master", and 2) Slave Bus Units (SBU's) which do not have the capability of controlling the bus and that become active on the bus, as senders or receivers of data, only in response to command signals from a bus master.

MBU's include central processing units (CPU's), microprocessor-controlled attachments and direct-memory access (DMA) devices. SBU's may include primary storage units, such as a semiconductor memory, and various types of passive I/O devices, such as displays, "dumb" terminals and printers. In a system of the type represented here it is assumed that any MBU having been granted control of the bus can initiate access to any of the SBU's, which can be considered to be common resources shared by all MBU's.

Contention between MBU's for control of the bus is resolved by combination of radial (parallel) and serial-poll arbitration. Several levels of priority are possible, each with a separate request (REQB) line and the corresponding acknowledgement (ACKB) line. The bus arbiter resolves priority radially between requests received on separate levels and grants the bus by activating the appropriate ACKB signal. Contention between MBU's on a single level, as represented in Fig. 1, is resolved by serial polling. In the particular polling level illustrated, MBU 3 has highest priority, MBU 4 is of intermediate priority and MBU 5 is of lowest priority. Although only one level is represented in Fig. 1, it is assumed that the arbiter receives requests, and grants the bus, for other levels, represented by additional pairs or REQB and ACKB lines that are not shown.

Each MBU 3—5 has a Poll In (PI) input terminal and a Poll Out (PO) output terminal, the various terminals being designated 10—15. As illustrated each MBU 3—5 is interconnected with the bus arbiter and other MBU's by a Request Bus (REQB) line 20, and an Acknowedge Bus (ACKB) line 21. The ACKB line is unidirectional from a bus arbiter output terminal to an input terminal of each MBU. REQB is connected to a bidirectional terminal of each MBU, to an input terminal of the bus arbiter and to the PI terminal of MBU A. Other control lines relating to the arbitration scheme described herein are the Select (SEL) line 22 and the Ready (RDY) line 23. The SEL line is connected bidirectionally to each MBU and to input terminals of the bus arbiter and each SBU. The RDY line is unidirectional from output terminals of each SBU to input terminals of each MBU.

The system configuration illustrated in Fig. 1 provides the capability of attachment of a plurality of potential bus masters (MBU's), such as microprocessors and DMA devices and a plurality of shared peripheral "slave" units (SBU's), including random access memory units, display units and printers, which may be accessed or used as I/O devices by an MBU that has control of the bus. A device having control of bus 2 for transfer of information, to or from a slave device (SBU), at any given instance in time, is referred to as the current bus master (CBM). The bus arbiter itself is typically a conventional priority resolving circuit located in the I/O u.c. channel control logic of a CPU. However, it may be a standalone unit. Priority between requests received on separate request lines may be resolved by any of a number of prioritization algorithms known in the art. The only special constraint is an interlock between deactivation of ACKB and activation of SEL required to avoid a certain type of race condition, the nature of which will be explained.

The specific functions and operation of bus arbiter 1, bus 2, and MB devices 3—5, in particular, are described below.

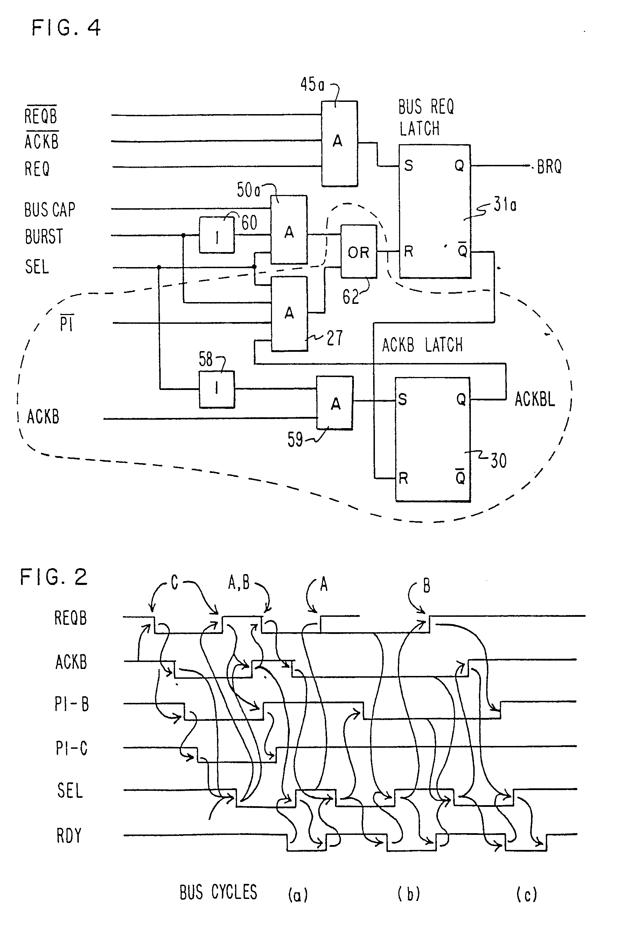

As indicated, multiple potential bus masters (MBU's) may be connected to a single REQB/ACKB pair of control lines provided each MBU is equipped with a pair of PI/PO pins, such as pins 10 and 11 in Fig. 1 to permit serial propagation of a poll signal, which is initiated by activation of a request signal on the REQB line. Interconnection of the serial request pins is illustrated in Fig. 1 and an example of an arbitration sequence is shown in Fig. 2. In the example, MBU C presents a request followed by simultaneous requests from MBU's A and B.

The states of poll-in terminal 12 to MBU B (reference 4) and poll-in terminal 14 to MBU C (reference 5) are also shown in Fig. 2 as PI-B and PI-C, respectively. Other signals illustrated are Select and Ready. Fig. 2 further shows bus cycles (a), (b), and (c). Note that all signals levels are active low.

Bus master C is granted cycle (a), Bus masters A and B present simultaneous requests when ACKB is deactivated in cycle (a). The simultaneous requests appear to be a two cycle burst to the bus arbiter and it holds ACKB active until SEL of cycle (c) is activated. During cycle (b), MBU A activates Poll Out terminal 11, Fig. 1, enabling MBU B for cycle (c). Thus, in the sequence illustrated in Fig. 2, MBU C acquires access to the bus in cycle (a) and the simultaneous requests by MBU A and MBU B are resolved so that MBU A gets access to the bus in cycle (b) and MBU B gets access to the bus in cycle (c).

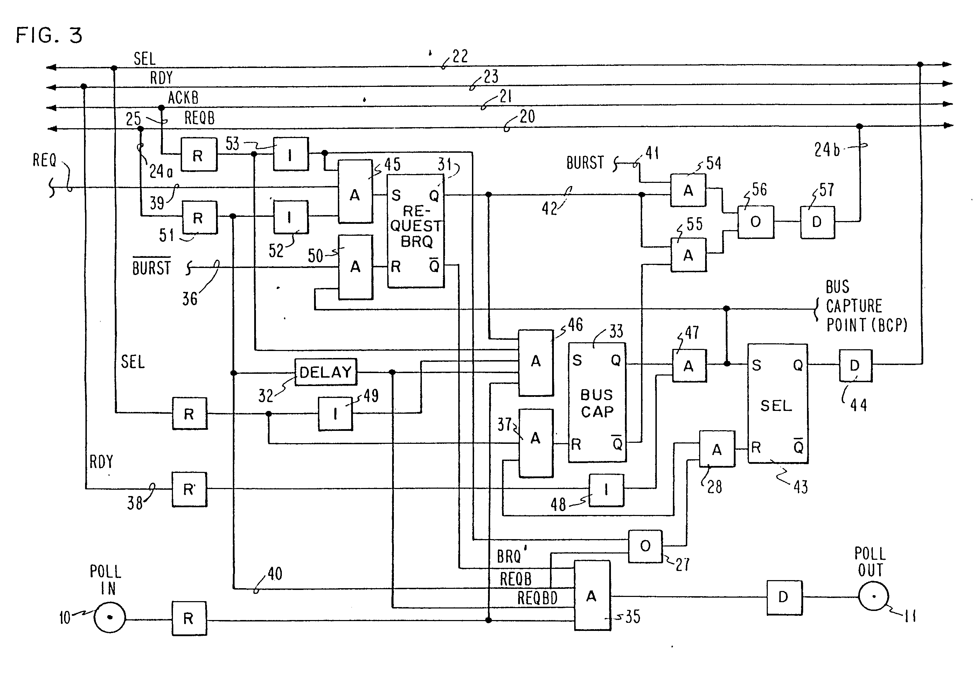

Serial arbitration of bus requests from MBU devices 3—5 is accomplished by means of lines 20—22 connected between bus arbiter 1, which may be a standalone arbitration unit as indicated or the central processing unit (CPU) of the data processing system, and the attached MBU devices 3—5 as shown in Fig. 1. MBU devices 3—5 present their requests to the arbiter via REQB (Request Bus) line 20 and use of the bus is granted by activation of the ACKB (Acknowledge Bus) line 21. A polling chain, consisting of propagation decision logic in each MBU device 3—5, interconnected via the Poll-In (PI) and Poll-Out (PO) pins 10—15 is driven by the REQB line 20, which initiates the arbitration or polling sequence. Each MBU has a bidirectional logic means comprising a REQB I/O line, such as line 24—Fig. 1, comprising portions 24a and 24b in Fig. 3 and pin connections such that activation of the line by any MBU is detected directly by all MBU's. Activation of REQB by one or more devices acts directly on each MBU through the bidirectional pin connection to clamp or inhibit the "set" input of each bus request latch and to condition bus capture or propagation of the poll signal after a delay sufficient to permit any marginal request state to settle. Further circuit details are shown in Figs. 3 and 4.

An implementation of the bus-request and arbitration logic of a particular MBU device such as device 3 (MBU A) is shown in Fig. 3.

Presentation of a bus request via REQB line 20 is controlled by setting bus request means comprising Bus Request latch (BRQ) through AND circuit 45 responsive to an external signal on Request line 39. In Fig. 3, the active Q output of latch 31 of a representative MBU, when set, is applied via circuit blocks 54, 56 and 57 to REQB line 20 and then to arbiter 1 and the other MBU's. The "set" input to latch 31 in any MBU is clamped or inhibited by activation of REQB. This prevents latch 31 from responding to another external request signalled via Request (REQ) line 39 and guarantees stability of the decision logic during the polling interval. The set input of BRQ latch 31 is also inhibited by a signal on ACKB line 21 (further comprising line 25 in Figs. 1 and 3). This is required to avoid a possible race condition which could result if deactivation of ACKB were slow in response to the gating off of REQB by a bus capture sequence. Without this interlock, a second MBU could reactivate REQB before ACKB line 21 and other conditions for bus capture associated with the current arbitration cycle are removed. This could create conditions for setting a bus capture state in a second MBU before the current bus cycle is completed. This possibility is eliminated by the ACKB interlock with the Bus Request latch 31 which will effectively prevent reactivation of REQB while ACKB is still active. Latch 31 is reset, contingent upon a bus capture, by activation of Select (SEL) as the result of setting Select latch 43. The immediate effect of resetting BRQ latch 31 is to enable poll propagation. The interlock of SEL line 22 with the resetting of BRQ latch 31 prevents the propagated poll signal from setting a bus capture state in a lower priority MBU since SEL line 22 is an inhibiting condition for bus capture.

A delay element 32 delays the enabling of the poll capture and poll propagate decision logic a sufficient time after clamping the input to latch 31 to allow for any transition or metastable state to settle out. The delay element (such as delay element (32) of each MBU functions in parallel with that of each of the other MBU's, so that only the delay element of the first MBU in the polling chain will ordinarily have an effect on the total propagation time. The delay provided in each MBU needs to be only great enough to satisfy circuit speed characteristics of the particular MBU, without regard to delay characteristics of other MBU's.

It should be noted that when two or more MBU's gain sequential access to the bus during the same REQB/ACKB cycle, as can happen, the delay elements of the second and following MBU's have no effect on propagation or response time since the outputs of the delay elements will have already reached their active levels prior to propagation of the poll signal. This means that each successive MBU can be ready to start a bus cycle as soon as the Ready (RDY) line 38 is deactivated by the preceding bus master. This can result in a combined bus transfer rate for two or more devices equivalent to that of burst mode operation for a single device.

Interim control means comprising the Bus Capture (BUS CAP) latch 33 is set through AND circuit 46 as soon as all conditions for bus capture except "Not Ready" are satisfied. The conditions include Bus Request latch 31 active, ACKB active, Delay 32 output active, Select line 22 inactive but inverted by Invert circuit 49 and a poll-in signal received at terminal 10 from a higher priority MBU or from the REQB line 20 if this is the highest priority MBU. The purpose of latch 31 is to prepare the MBU to take control of the bus on the next bus cycle. The actual bus capture point, which is the earliest point at which the MBU can initiate activity on the bus by activating address, data and control lines, is when the Ready (RDY) signal of a preceding bus cycle becomes inactive. This point is logically defined by the output of the BUS CAP latch 33 AND'ed with the inverted Ready signal (output of Invert circuit 48) through AND gate 47. The output of AND gate 47, designated as the Bus Capture Point (BCP) signal is applied simultaneously to set the Select (SEL) latch 43 and to condition resetting of the BRQ latch 31. The BCP signal is used, as indicated, to gate address, data and control signals to the bus. The active state of these lines is validated by the Select (SEL) line 22, which is activated by the SEL latch 43 through driver circuit 44. A further function of the BUS CAP latch 33 is to provide a signal (NOT Q) that by way of AND gate 55 gates off the bus request at the earliest possible convenient point in the bus capture sequence. The resulting deactivation of the REQB line 20 prepares the system for arbitration of new requests by signalling the bus arbiter to drop the ACKB line 21. This permits MBU's with pending requests to set their BRQ latches, corresponding to latch 31, which in turn will reactivate the REQB line 20 for a new arbitration sequence. The conditions which set the BUS CAP latch 33 correspond to the earliest time at which bus capture by a specific MBU is assured and is therefore the earliest unambiguous point at which preparation for a new arbitration cycle can be initiated. However, actual bus capture, which defines the point at which the MBU can drive the bus, must be delayed until deactivation of the RDY signal. The BCP signal is applied through AND gate 50 as a condition for resetting the BRQ latch 31. However, a second reset condition, activation of SEL, delays the resetting of BRQ, as previously indicated, in order to prevent poll propagation, enabled by resetting BRQ, until the SEL signal has been asserted as an inhibiting condition to the BUS CAP latches of lower priority MBU's. A further interlock, the conditioning of the reset input of the BUS CAP latch 33 by SEL and RDY through AND gate 37 insures that the BUS CAP latch will be reset after the BRQ latch is reset. The resetting of BUS CAP latch 33 after BRQ latch 31 insures that REBQ line 20 cannot be inadvertently reactivated in the same cycle.

The Select (SEL) latch 43 is held active and drives the SEL line 23 until a RDY signal is received from a Slave Bus Unit (SBU). The SEL latch 43 is reset by RDY through AND gate 28, which is also conditioned by the OR'ed combination of REQB and NOT ACKB. The conditioning of the SEL latch reset input by REQB and NOT ACKB, as shown, is an interlock that would be required only under very improbable design circumstances. Under most circumstances of good design practice, the only condition for resetting the SEL latch would be the RDY signal.

For the sake of thoroughness in analysis of design considerations in the use of the circuit of Fig. 3, the special interlocks are discussed below.

Setting of the BUS CAP latch 33 enables the SEL latch 43 to be set as soon as RDY from the previous bus cycle becomes inactive. It also immediately degates REQB, which permits the arbiter to reset ACKB. This, in turn, permits another MBU to activate a new request, which would be followed by sequential reactivation of REQB and ACKB. If this sequence of events is extremely FAST, it might produce the conditions for setting a second BUS CAP latch, such as latch 33 before the SEL latch 43 has had time to be set and to become effective as an inhibiting input to the BUS CAP latch. This could result in the undesirable state of a new bus capture sequence being initiated before the current bus capture cycle is terminated. This possibility is extremely improbable and could only occur if there were a very long delay between deactivation of SEL, which is a condition for setting BUS CAP, and the responding deactivation of RDY, such that the sequence described previously, initiated by setting the BUS CAP latch could be completed before setting of SEL could take effect. Good design practice would ordinarily dictate that deactivation of RDY would result immediately from deactivation of SEL. Thus, the SEL latch 43, conditioned by the negation of RDY, would be set immediately after the BUS CAP latch 33, conditioned by the negation of SEL, is set. However, if there is any possibility that activation of the select signal could be delayed enough to permit the sequence described above to result in the improper setting of a second BUS CAP latch, this type of "race" condition can be effectively prevented by the design of interlocking circuits in the arbiter that will not permit ACKB to be deactivated until assertion of the corresponding SEL signal has been detected. With this interlock, it is not possible to produce the conditions for a new bus capture until the current bus sequence has been completed.

As indicated in the preceding paragraph, the interlocking of ACKB and SEL in the arbiter, such that deactivation of ACKB is conditioned by the assertion of SEL, is only necessary under special, highly improbable design circumstances. It would be the responsibility of the designer of a particular system, based on the peculiar characteristics of the system to determine whether such an interlock is desirable or warranted. If it is assumed that the interlock is required, then a further interlock is required in each MBU to insure that SEL is held active and is not reset by RDY until the resetting of ACKB is insured. This is accomplished by using the negation of ACKB as a condition for resetting the SEL latch 43. However, REQB and ACKB may be forced to remain active by a lower priority request in the polling chain or by the existence of a burst mode state. In this case, the active state of ACKB must not be allowed to prevent the resetting of the SEL latch. When REQB and ACKB are kept active either by burst mode or by a lower priority request state, the use of ACKB as an inhibiting condition for resetting the SEL latch can be overridden by OR'ing REQB with the negation of ACKB and AND'ing the result with RDY, as shown by the logic represented by OR gate 27 and AND gate 28. It should be noted that if the aforementioned ACKB/SEL interlock is not required, this logic can be omitted. In this latter case, the RDY signal can be applied directly to the reset input of the SEL latch, as the only condition required for setting the latch.

Poll propagation AND circuit 35 (PI to PO) is enabled by absence of an active bus request and activation of REQB by a different MBU. The enabling effect of REQB is delayed to insure that the local request state has settled before effecting a decision to propagate. REQB is also applied directly without delay via line 40 as a condition for Poll Out (PO) in order to speed up deactivation of the poll signals when the source signal (REQB) on line 20 is removed.

If burst mode operation is supported, a "BURST" signal on line 41 indicating activation of burst mode, is used to override the effect of the Bus Capture latch 33 by preventing resetting of BRQ latch 31 via the negated input line 36 and by providing an alternate path for gating BRQ latch 31 output via line 42 and AND gate 54 to the REQB line, so that REQB is continuously activated for the duration of burst mode, while the Bus Capture latches 33 and SEL latch 43 cycle on and off as required to control the sequencing of bus cycles.

The logic for activating BURST may vary depending on application. However, it should be set before the "Bus Capture" point of the first burst cycle and should be reset just prior to, or simultaneously with setting the Bus Capture latch 33 in the last cycle. The latter condition insures that the REQB line 22 will be deactivated as soon as possible in preparation for the next arbitration cycle.

In cases where "lockout" of a higher priority MBU due to chaining of burst requests might be a problem, a modification of Fig. 3 by the addition of circuit details shown in Fig. 4 may be desirable. The function of the circuit of Fig. 4 is to force rearbitration of each request in the event of simultaneous burst requests, which would otherwise be processed sequentially before any later request, regardless of priority, could be granted. A basic condition for rearbitration is that all lower priority pending requests active at the time of bus capture by a particular MBU must be reset as soon as the higher priority bus capture is detected. Fig. 4 shows, within the dotted line, the circuit addition required to permit an MBU to detect a bus capture by a higher priority MBU and, as a result, to reset its own BRQ latch, such that its request will be removed from activation of REQB, so its request together with subsequently occurring requests can be rearbitrated. It must be noted that resetting of the BRQ latch in all MBU's re-establishes conditions for bus arbitration the condition that indicates a higher priority bus capture is the combination of ACKB, SEL and the inactive state of PI. However, a direct AND combination of SEL and ACKB could result in a premature, erroneous resetting of BRQ if ACKB became active before the SEL signal of a preceding cycle reached its inactive state. The purpose of the ACKB latch 30 (ACKBL) in Fig. 4 is to delay the effect of ACKB as a reset condition until any residual SEL condition from a preceding bus cycle has disappeared. This is accomplished by applying ACKB ANDed with the negation of SEL through AND gate 59 and inverter 58 as the set condition for ACKBL latch 30. Thus ACKBL latch 30 will be set to ACKB state as soon as SEL becomes inactive and will retain the ACKB state as a condition for resetting BRQ until subsequent activation of SEL resets BRQ which in turn resets ACKBL. Under some circumstances, it may be desirable to force rearbitration between simultaneous requests from non-burst-mode operating MBU's. In such a case, this can be simply accomplished by eliminating "BURST" as an input to AND gate 27. It should be noted, however, that this would forego one of the advantages for this arbitration scheme; namely the ability to process simultaneous requests very rapidly, in quasi-burst mode, without the delays inherent in rearbitration.

Timing of requests is generally shown in Fig. 2. Details for timing for three cases in particular is shown in Figs. 5—7 where BRQA and BRQC are output of bus request latches of MBU's A and C respectively and REQBD is the delayed REQB signal. Besides Figures 5, 6 and 7 show respectively:

non-simultaneous requests, where two successive requests result in separate REQB/ACKB cycles;

nearly simultaneous requests where two requests are serviced sequentially under a single REQB/ACKB cycle; and

two nearly simultaneous requests where the higher priority requests is serviced in burst mode, which is followed by a single bus cycle for the second request, all under a single REQB/ACKB cycle.

These diagrams illustrate the functioning and interlocking of the principle signals shown in Fig. 3. Fig. 5 shows the high degree of parallelism that is possible in servicing successive requests even when the second request is not allowed to become active until ACKB for the first request has dropped. Since deactivation of REQB and ACKB is initiated at the earliest possible point in the bus capture cycle of the first requestor (MBU C), it is quite likely that arbitration of the second request can be completed before the end of the first bus cycle, so that the second bus cycle is ready to start as soon as the fall of Ready (RDY) signals the end of the first bus cycle. Timing relationships less favorable than shown are likely only if the response of ACKB to REQB is substantially slower than the response times between SEL and RDY. In any case, the diagram indicates serial arbitration of sequential requests can be practically as efficient as conventional parallel, or radial-request, arbitration. This is due essentially to the fact that the serial polling process can be initiated well in advance of the ACKB response from the arbitrator, so that the bus grant decision logic of the arbitration, with its inherent delay, operates in parallel with the logic of the polling chain.

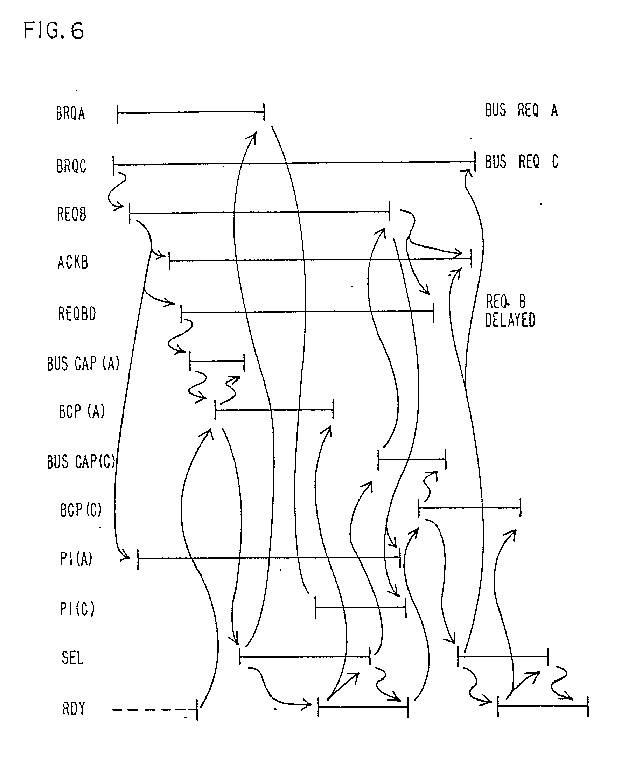

Fig. 6 shows the case of two bus requests being set closely enough together in time that the inhibiting or clamping effect of REQB is not soon enough to prevent the second request latch from being set. In this case REQB is held active until both requests have been serviced, and the effect, from the standpoint of the arbiter, is equivalent to burst mode operation for two bus cycles. Bus requests from other MBU's, regardless of priority, are locked out until the currently active requests have been serviced. In the case of requests for single bus cycles, as shown in the diagram, this probably presents no problem since the probability of more than two "simultaneous" requests seems small in view of the very short slice of time during which a second or third request can be set after the first has activated REQB. Furthermore, the possible disadvantage is offset by the rapidity with which the active requests can be serviced. After the highest priority request has been serviced, each successive cycle can be serviced without the delay due to REQBD or ACKB since these signals will continue to be active. As indicated by Fig. 6, the next bus cycle after the first waits only for the fall of RDY.

Fig. 7 shows the timing for a two-cycle burst followed immediately by a bus cycle corresponding to a request (BRQC) set immediately following the request for burst cycles. The net effect is that of a three-cycle burst. It should be noted that if two or more burst-mode devices present requests simultaneously, the total bus lockout time will be the sum of combined burst-cycle times.

A solution to this potential situation is offered by the logic modification shown in Fig. 4 described previously. The effect of this modification is to reset BRQ latch 31a if a higher priority device captures the bus. It has the effect of forcing the MBU to permit rearbitration by withdrawing its request until the conditions for arbitration are reestablished. This will be as soon as ACKB for the current bus master is deactivated. If the ACKB response to dropping REQB is relatively fast, there will be no great time penalty in rearbitrating the second request because much of the rearbitration sequence will be completed in parallel with the last bus cycle of the preceding burst sequence. It should be noted in Fig. 4 that the primary request, REQ(C), as well as the corresponding burst-mode state are held active until MBU C has captured the bus.

The foregoing shows in conjunction with the logic and timing diagrams of Figs. 1—7 that the scheme of using the REQB signal as the initial stimulus to a serial arbitration polling chain achieves a significant improvement in serial arbitration performance, compared to previously proposed schemes, so that serial arbitration, in terms of overall response times, becomes nearly as efficient as, if not equal to, radial arbitration.

The inventive system described herein provides improved response to bus requests by speeding serial arbitration. Interlocking of Request, Acknowledge, and the arbitration sequence eliminates any need for specifying minimum bus signal durations.

In the case of multiple simultaneous requests, all MBU's with active requests at the time of a bus capture will automatically be granted the bus in sequential order, according to priority, before a new arbitration sequence is initiated, i.e., by dropping and reactivating REQB. This presents the possibility of preventing a higher priority MBU from presenting its request for arbitration until all currently active requests have been serviced. In some cases this might be considered an advantage. Whatever the disadvantage, it is offset by the speed with which current requests can be honoured since the poll signal is propagated without the delays that are caused initially by the ACKB response or the stabilization delay that is applied to REQB as a condition for propagation at the beginning of an arbitration sequence. The simple logic circuit described overcomes the problem of lockout by successive burst requests with relatively little impairment of performance.

**Claims**

1. A bus arbitration system for establishing in successive bus cycles the polling and interconnection of devices (3—8) assigned to a bus in a data processing system, said bus including a plurality of bus address, data and control lines, said arbitration system comprises: a bus arbiter (1) for receiving request signals for use of said bus on a common request line (20), and for supplying acknowledgement signal to grant use of said bus on a common acknowledge line (21), a plurality of bus units (3, 4, 5) arranged on said bus and requiring access to said bus for control of data processing operations in said system, a polling line (10—15) serially connecting all bus units to one another in accordance with a predetermined priority polling sequence from highest priority to lowest priority for the purpose of polling said bus units, a request latch (31) in each of the bus units operable to be set upon a request by the bus unit for generating a signal on said request line (20), a bus capture latch (33) in each bus unit to be set if said request latch is set and upon the presence of a poll-in signal and bus acknowledgement signal, a propagation gate (35) in each bus unit to propagate the polling signal to the next bus unit if said bus request latch is not set, inhibit means (45) to inhibit the set input of said request latch in each bus unit to stabilize said request latch upon the presence of a request signal on the request line (20) and a delay element (32) connected to the inputs of said bus capture latch (33) and said propagation gate (35) in each bus unit insuring that said bus capture latch or said propagation gate will not be enabled until said request latch has stabilized, such delay element acting in parallel with poll propagation and with each other and being tailored to the specific technology of each bus unit; said system being characterized in that said common request line (20) is simultaneously used as a direct input of the polling line into the first bus unit of the priority polling sequence, and in each bus unit as a direct input to the inhibit means (45) of said request latch and to said delay element (32), so that the polling propagation and the stabilization of said request latches can begin without waiting for acknowledgement from said bus arbiter.

2. The bus arbitration system according to claim 1 further comprising means for supplying burst mode signal (36, 41) in defining burst mode operations on a selective basis for said bus units to enable access of said units to said bus for a plurality of bus cycles, said request latch (31) of a bus unit being maintained active by burst mode means (50, 54) responsive to said burst mode signals following a request therein throughout the time period required to complete the burst mode operations defined by said burst mode signals.

3. The bus arbitration system according to claim 2, further comprising override means (27, 28) enabling continued cycling in a requesting device as required to control burst sequencing of bus cycles.

4. The bus arbitration system according to claim 2 or 3 further comprising: re-arbitration means (Figure 4) in each of said bus units operable to de-activate lower priority bus units when a higher priority unit captures said bus in a burst mode thereby withdrawing all other requests from contention and enabling re-arbitration of requests upon completion of the burst mode operation by said higher priority unit to thereby prevent lockout of higher priority units that otherwise might occur due to chaining of burst requests from lower priority units.

5. The bus arbitration system according to any one of the preceding claims wherein said bus units (3, 4, 5) are arranged in a plurality of bus levels each level having its own set of bus address and data lines (2) and bus control lines (20, 21, 22).

6. The bus arbitration system according to any one of the preceding claims wherein said bus units are divided in master bus units (3, 4, 5) serving as controllers and slave bus units (6, 7, 8) responsive to signals from said master bus units.

7. The bus arbitration system according to any one of the preceding claims wherein each bus unit is operable to process two nearly simultaneous requests, one a higher priority burst mode request requiring two or more bus cycles and one a single bus cycle request by servicing the higher priority request in a burst mode followed by servicing of the single bus cycle request, all without the need to reissure either request.

## Patentansprüche

1. Buszuteilungssystem für die Herstellung des Aufrufs und des Anschlusses von Vorrichtungen (3—8), die in einem Datenverarbeitungssystem einem Bus zugeordnet sind, in aufeinanderfolgenden Buszyklen, wobei besagtes Bus eine Mehrzahl von Busadressen, Daten und Steuerleitungen enthält und das besagte Zuteilungssystem umfasst: eine Buszuteilungsvorrichtung (1) für den Empfang von Abrufsignalen für den Gebrauch des besagten Bus auf einer gemeinsamen Abrufleitung (20) und für die Bereitstellung von Quittiersignalen, die die Benutzung des besagten Bus auf einer gemeinsamen Quittierleitung (21) freigeben, eine Mehrzahl von Buseinheiten (3, 4, 5), die auf besagtem Bus angeordnet sind und den Zugang zum besagten Bus für die Steuerung von Datenverarbeitungsvorgängen in besagtem System anfordern, eine Aufrufleitung (10, 15), die alle Buseinheiten in Serie miteinander verbindet, nach einer vorgegebenen Abrufpriorität, von der höchsten bis zur niedrigsten Prioritätsstufe, für den Aufruf der besagten Buseinheiten, eine Anforderungsschaltung (31) an jeder der Buseinheiten, benutzbar, um auf Anforderung von der Buseinheit ein Signal auf der besagten Anforderungsleitung (20) zu generieren, eine Busaufnahmeschaltung (33) in jeder Buseinheit, die gesetzt werden kann, wenn die besagte Anforderungsschaltung gesetzt ist, und bei Anwesenheit eines Eingangssignals und eines Busbestätigungssignals, ein Weiterleitungstor (35) in jeder Buseinheit, um das Abrufsignal an die nächste Buseinheit weiterzuleiten, wenn die besagte Busanforderungsschaltung nicht gesetzt ist, Sperrmittel (45), um den gesetzten Eingang des besagten Anforderungsschalters in jeder Buseinheit zu sperren, um besagte Anforderungsschaltung bei Anliegen eines Anforderungssignals an der Anforderungsleitung (20) zu stabilisieren, und ein Vorzögerungselement (32), an die Eingänge der besagten Busaufnahmeschaltung (33) und des besagten Weiterleitungstors (34) in jeder Buseinheit angeschlossen, um zu gewährleisten, dass besagter Busaufnahmeschalter oder besagtes Weiterleitungstor nicht freigegeen wird, solange der besagte Anforderungsschalter nicht stabilisiert ist, wobei das Verzögerungselement parallel mit der Abrufweiterleitung und mit jedem anderen Element wirkt und auf die spezifische Technologie einer jeden Buseinheit abgestimmt ist; besagtes System dadurch gekennzeichnet, dass die besagte gemeinsame Anforderungsleitung (20) gleichzeitig als Direkteingang für die Abrufleitung in der ersten Buseinheit für die Abrufpriorität verwendet wird und dass jede Buseinheit einen direkten Eingang an die Sperrmittel (45) des besagten Anforderungsschalters und zum besagten Verzögerungselement (32) enthält, sodass die Weiterleitung des Aufrufs und die Stabilisierung der besagten Anforderungsschalter beginnen kann, ohne die Bestätigung vom besagten Buszuteilungselement abwarten zu müssen.

2. Buszuteilungssystem gemäss Anspruch 1, ferner Mittel enthaltend, um das Signal des Einpunktbetriebs (36, 41) anzugeben, durch Definition der Einpunktbetriebsvorgänge auf einer selektiven Basis für besagte Buseinheiten, um den Zugang besagter Einheiten an besagtes Bus für mehrere Buszyklen freizugeben, wobei der Anforderungschalter (31) einer Buseinheit durch Einpunktbetriebsmittel (50, 54) aktiv gehalten wird, welche auf die besagten Einpunktbetriebssignale ansprechen, die auf eine Anforderung folgen, während der Zeit, die erforderlich ist, um die Einpunktbetriebsvorgänge auszuführen, die durch besagte Einpunktsignale definiert sind.

3. Buszuteilungssystem gemäss Anspruch 2, ferner Vorrangmittel (27, 28) enthaltend, die den ununterbrochenen Ablauf in einer Anforderungsvorrichtung ermöglichen, nach dem Bedarf für die Steuerung der Einpunktsequenzen von Buszyklen.

4. Buszuteilungssystem gemäss Anspruch 2 oder 3, ferner enthaltend:

Neu-Zuteilungsmittel (Abbildung 4) in jeder der besagten Buseinheiten, für die Entaktivierung der Buseinheiten mit niedrigerer Priorität, wenn eine Einheit mit höherer Priorität das besagte Bus in einem Einpunktbetrieb erfasst, sodass alle anderen Anforderungen aus dem Konkurrenzbetrieb zurückgezogen werden, und eine neue Zuteilung der Anforderung nach Ausführung des Einpunktbetriebs durch die besagte Einheit mit höherer Priorität vorgenommen wird, um zu verhüten, dass Einheiten mit höherer Prioritätsstufe ausgeschlossen werden, was sonst auftreten könnte infolge der Verkettung der Einpunktanforderungen von den Einheiten mit niedrigerer Prioritätsstufe.

5. Buszuteilungssystem gemäss einem der vorangehenden Ansprüche, in dem besagte Buseinheiten (3, 4, 5) in einer Mehrzahl von Busebenen angeordnet sind, wobei jede Ebene ihren eigenen Satz Busadressen und Datenleitungen (2) und Bussteuerleitungen (20, 21, 22) besitzt.

6. Buszuteilungssystem gemäss einem der vorangehenden Ansprüche, in dem besagte Buseinheiten in Hauptbuseinheiten (3, 4, 5), die als Steuerelemente dienen, und Nebenbuseinheiten (6, 7, 8), die auf Signale von den besagten Hauptbuseinheiten ansprechen, unterteilt sind.

7. Buszuteilungssystem gemäss einer der vorangehenden Ansprüche, in dem jede Buseinheit betätigt werden kann, um zwei nahezu gleichzeitige Anforderungen zu verarbeiten, eine Anforderung höherer Prioritätsstufe im Einpunktbetrieb, welche zwei oder mehrere Buszyklen erfordert, und eine einfache Buszyklusanforderung, durch erste Bedienung der Anforderung höherer Prioritätsstufe in Einpunktbetrieb mit anschliessender Ausführung der Anforderung des einfachen Buszyklus, alles ohne die Notwendigkeit, eine der beiden Anforderungen neu auszugeben.

## Revendications

1. Système d'arbitrage de bus pour assurer au moyen de cycles successifs l'appel sélectif et l'interconnexion de dispositifs (3—8) affectés à un bus dans un système de traitement de données, ledit bus comprenant une pluralité de lignes de commande, d'adresses et de données, ledit système d'arbitrage comprenant: un dispositif d'arbitrage de bus (1) qui reçoit des signaux de demande d'utilisation dudit bus transmis sur une ligne commune de demandes (20) et qui transmet sur une ligne commune d'accusés de réception (21) un signal d'accusé de réception autorisant l'utilisation dudit bus, une pluralité d'unités (3, 4, 5) associées audit bus et demandant à accéder à celui-ci pour commander des opérations de traitement de données dans ledit système, une ligne dite d'appel sélectif (10—15) connectant en série toutes lesdites unités les unes aux autres en fonction d'une séquence d'appel sélectif à priorités prédéterminées allant de la priorité la plus élevée à la priorité la moins élevée, aux fins de l'appel selectif desdites unités, une bascule (31) dite de demande qui, dans chacune desdites unités, est enclénchée lorsqu'une demande est faite par l'unité associée et qui engendre un signal sur ladite ligne de demandes (20), une bascule (33) dite de saisie de bus qui, dans chacune desdites unités, est enclenchée si ladite bascule de demande est enclenchée et si un signal d'appel sélectif entrant et un signal d'accusé de réception sont tous deux présents, une porte de propagation (35) qui, dans chacune desdites unités, propage le signal d'appel sélectif à l'unité suivante si ladite bascule de demande n'est pas enclenchée, des moyens d'inhibition (45) pour inhiber l'entrée d'enclenchement de ladite bascule de demande dans chaque unité associée afin de stabiliser cette bascule lorsqu'un signal de demande est présent sur la ligne de demande (20), et un élément à retard (32) connecté aux entrées de ladite bascule de saisie de bus (33) et à ladite porte de propagation (35) dans chacune desdites unités et s'opposant à ce que ladite bascule de saisie de bus ou ladite porte de propagation soit conditionnée avant la stabilisation de ladite bascule de demande, ledit élément à retard agissant en parallèle avec la propagation du signal d'appel sélectif et avec chaque autre élément à retard et étant adapté à la technologie spécifique de chacune desdites unités,

ledit système étant caractérisé en ce que ladite ligne commune de demande (20) est simultanément employée comme entrée directe, d'une part, pour la ligne d'appel sélectif dans la première desdites unités de ladite séquence d'appels sélectifs à priorité déterminée et, d'autre part, dans chacune desdites unités, pour les moyens d'inhibition (45) de ladite bascule de demande et pour ledit élément à retard (32), si bien que la propagation du signal d'appel sélectif et la stabilisation desdites bascules de demande peuvent commencer sans attendre un accusé de réception dudit dispositif d'arbitrage.

2. Système d'arbitrage de bus selon la revendication 1, caractérisé en ce qu'il comprend en outre des moyens pour engendrer des signaux de mode continu (36, 41) définissant des opérations de mode continu sur une base sélective au fins desdites unités afin de permettre à celles-ci d'accéder audit bus pendant une pluralité de cycles, ladite bascule de demande (31) d'une unité donnée étant maintenue dans l'état actif par des moyens de mode continu (50, 54), en réponse auxdits signaux de mode continu consécutivement à une demande contenue dans ces derniers, pendant tout le laps de temps requis pour achever les opérations en mode continu définies par lesdits signaux de mode continu.

3. Système d'arbitrage de bus selon la revendication 2, caractérisé en ce qu'il comprend en outre des moyens d'évitement (27, 28) permettant d'effectuer des cycles continues dans un dispositif demandeur de façon appropriée pour commander la mise en séquence des cycles du bus.

4. Système d'arbitrage de bus selon la revendication 2 ou 3, caractérisé en ce qu'il comprend en outre:

des moyens de réarbitrage (figure 4) associés à chacune desdites unités afin de déactiver les unités correspondantes lorsqu'une unité possédant une priorité plus élevée qu'elles saisit ledit bus en mode continu, ce qui a pour effet d'éliminer toutes les autres demandes d'accès et de permettre un réarbitrage des demandes une fois que l'exécution de l'opération en mode continu par ladite unité à priorité plus élevée est achevée, de façon à éviter le blocage des unités à priorités plus élevées qui, autrement, pourrait se produire en raison du chaînage des demandes émanant d'unités à priorité moins élevée.

5. Système d'arbitrage de bus selon l'une quelconque des revendications précédentes, caractérisé en ce que lesdites unités (3, 4, 5) comportent une pluralité de niveaux, dont chacun possède son propre ensemble de lignes d'adresse et de données (2) et de lignes de commande de bus (20, 21, 22).

6. Système d'arbitrage de bus selon l'une quelconque des revendications précédentes, caractérisé en ce que lesdites unités sont réparties en unités maîtresses (3, 4, 5) faisant fonction d'unités de commande et en unités esclaves (6, 7, 8) répondant aux signaux provenant desdites unités maîtresses.

7. Système d'arbitrage de bus selon l'une quelconque des revendications précédentes, caractérisé en ce que chacune desdites unités peut traiter deux demandes presque simultanées, dont l'une est une demande en mode continu possédant une priorité plus élevée nécessitant deux cycles du bus ou davantage et dont l'autre est une demande

**0 114 928**

exigeant un unique cycle, en prenant d'abord en charge la demande à priorité plus élevée en mode continu, puis la demande exigeant un unique cycle, sans que l'une ou l'autre desdites demandes doive être retransmise.

FIG. 1

FIG. 4

FIG. 2

BUS CYCLES    (a)      (b)      (c)

FIG. 3

FIG. 5

Signal labels (top to bottom): BRQA, BRQC, REQB, ACKB, REQBD, BUS CAP (A), BCP (A), BUS CAP (C), BCP (C), PI (A), PI (C), SEL, RDY

BUS REQ A
BUS REQ C
REQ B DELAYED

FIG. 6

## 0 114 928

FIG. 7

Signals (top to bottom): BRQA, BURST, BRQC, REQB, ACKB, REQBD, BUS CAP(A), BCP(A), BUS CAP(C), BCP(C), PI(A), PI(C), SEL, RDY

Labels: BUS REQ A, BUS REQ C, REQ B DELAYED

6